(19) **Europäisches Patentamt**

**European Patent Office**

**Office européen des brevets**

(11) **EP 1 182 383 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
***F16J 9/08*** *(2006.01)*

(21) Anmeldenummer: **01114922.6**

(22) Anmeldetag: **20.06.2001**

(54) **Kompressionskolbenring**

Compression piston ring

Segment de compression

(84) Benannte Vertragsstaaten:
**AT BE CH CY DE DK ES FI FR GB GR IE IT LI LU MC NL PT SE TR**

(30) Priorität: **25.08.2000 DE 10041802**

(43) Veröffentlichungstag der Anmeldung:
**27.02.2002 Patentblatt 2002/09**

(73) Patentinhaber: **Federal-Mogul Burscheid GmbH 51399 Burscheid (DE)**

(72) Erfinder:
• **Mittler, Richard, Dipl.-Ing.
51379 Leverkusen (DE)**
• **Solia, Mario
50937 Köln (DE)**

(56) Entgegenhaltungen:
| | |
|---|---|
| **EP-A- 0 253 069** | **DE-A- 3 511 851** |
| **DE-C- 4 140 232** | **DE-C- 4 310 249** |
| **DE-U- 1 675 485** | **FR-A- 2 238 096** |
| **US-A- 1 278 015** | **US-A- 1 378 894** |
| **US-A- 5 380 018** | |

• **PATENT ABSTRACTS OF JAPAN Bd. 2000, Nr. 07, 29. September 2000 (2000-09-29) & JP 2000 120866 A (NIPPON PISTON RING CO LTD), 28. April 2000 (2000-04-28)**
• **PATENT ABSTRACTS OF JAPAN Bd. 1997, Nr. 11, 28. November 1997 (1997-11-28) & JP 9 196171 A (NIPPON SOKEN INC; TOYOTA MOTOR CORP), 29. Juli 1997 (1997-07-29)**
• **PATENT ABSTRACTS OF JAPAN Bd. 0072, Nr. 15 (M-244), 22. September 1983 (1983-09-22) & JP 58 109768 A (OOSAKA SANSO KOGYO KK), 30. Juni 1983 (1983-06-30)**

EP 1 182 383 B1

**Beschreibung**

Die Erfindung betrifft einen mit einem Stoßbereich versehenen Kompressionskolbenring, der am Ringumfang Querschnittsschwächungen aufweist, wobei der Ringumfang des Kompressionskolbenringes in vier gedachte Quadranten aufgeteilt ist.

Der JP 09196171-A ist ein Kolbenring zu entnehmen, der ausgehend vom Ringrücken in Richtung des Stoßes eine stetig abnehmende Wandstärke aufweist.

Ein ähnlicher, jedoch aus zwei unterschiedlichen Materialien gebildeter Kolbenring ist der US 1,278,015 zu entnehmen, wobei der Ringinnenbereich aus Eisen oder Stahl und der Ringaußenbereich aus einer Zinnschicht gebildet ist. Auch hier wird vom Ringrücken ausgehend, zumindest der innere Teil des Kolbenringes mit zum Steg hin abfallender Wandstärke ausgebildet.

Der US 2,591,920 ist ein Kolbenring zu entnehmen, der im Bereich einer seiner Stirnflächen oder aber im Bereich der inneren Umfangsfläche mit umlaufenden Nuten bzw. mit kammerartigen Anfasungen versehen ist, wobei die Dimension der Nuten bzw. Anfasungen, ausgehend vom Ringrücken hin zum Stoß zunimmt.

Aus der JP 2000120 866 A ist ein Kolbenring zu entnehmen, der direkt am Stoß eine Verjüngung aufweist. Auf diese Weise sind die Stoßenden gegenüber dem übrigen Ringbereich massearm ausgebildet, wodurch sich der Radialdruck im Stoßbereich verändert.

Die EP 0 253 069 A1 offenbart einen Kolbenring, bei dem durch Aussparungen im Stoßbereich erreicht werden soll, dass die Stoßenden während des Betriebes sicher an der Unterflanke der Kolbennut gehalten werden. Diese Maßnahme zielt darauf ab, Flatterbewegungen am Stoß zu verhindern.

Im praktischen Betrieb kommen im Verbrennungsmotor vielfach Kompressionskolbenringe mit konstanter Wandstärke zum Einsatz. Um den entstehenden Zylinderverzügen folgen zu können, muß die Wandstärke der Kompressionsringe auf den gesamten Durchmesser gesehen, verringert werden, wodurch sich die Tangentialkraft bei bestehender Spreizung verringert, oder sich die Spreizung bei bestehender Tangentialkraft erhöht. In beiden Fällen treten folgende Probleme auf:

- ungenügende Abdichtung des Brennraumes
- Montageschwierigkeiten des Kompressionskolbenringes
- erhöhter Ölverbrauch
- erhöhtes Blowby
- Ringbruch, Ringflattern

Die zum Stand der Technik angeführten Druckschriften zeigen Kompressionskolbenringe, die infolge der im wesentlichen vollständigen Schwächung des Ringquerschnittes über den gesamten Ringumfang gesehen die vorab beschriebenen Nachteile auch aufweisen.

Die Art der Anpassung eines Kolbenringes an die Form eines Zylinders basiert auf dessen durchschnittlichem Formfüllvermögen. Bei Kolbenringen mit konstanter Wandstärke ist eine Aussage zum Formfüllvermögen nur über einen sogenannten theoretischen Mittelwert möglich, wobei das Funktionsverhalten eines Kolbenringes jedoch von den örtlich schlechtesten Anpassungsmöglichkeiten abhängig ist.

Der Erfindung liegt die Aufgabe zugrunde, einen im gattungsbildenden Teil des ersten Patentanspruches beschriebenen Kompressionskolbenring dahingehend weiterzubilden, daß ein wesentlich höheres Formfüllvermögen zum Stoß hin erzielt werden kann, ohne daß die Tangentialkraft entscheidend abgesenkt wird.

Diese Aufgabe wird dadurch gelöst, daß bei Positionierung der einen Stoßkante im ersten und der anderen Stoßkante im vierten der gedachten Quadranten, die jeweilige Querschnittsschwächung ausschließlich im ersten und vierten Quadranten beiderseits des Stoßes und zwar im stoßnäheren Umfangsbereich über die gesamte Ringhöhe vorgesehen ist, wobei im Stoßbereich wieder die gleiche radiale Wandstärke wie im Bereich des Ringrückens gegeben ist.

Vorteilhafte Weiterbildungen des Erfindungsgegenstandes sind den Unteransprüchen zu entnehmen.

Die konkret auf den ersten und vierten Quadranten des Ringumfanges beschränkte (lokale) Querschnittsschwächung der Ringwandstärke ermöglicht nun, daß der Ring erhöhten Zylinderverzügen besser zu folgen vermag und demzufolge eine bessere Abdichtung des Brennraumes sichergestellt ist. Gleichzeitig wird das Formfüllvermögen erhöht, wodurch sich auch ein einheitlich erhöhtes Formfüllvermögen auf den gesamten Umfang des Ringes einstellt, ohne daß die Tangentialkraft gegenüber einem ungeschwächten Ring entscheidend abgesenkt wird.

Durch die vom Anwendungsfall abhängig auszulegende Form der Querschnittsreduzierung im ersten und vierten Quadranten, kann eine gezielte Annäherung an einen vorgebbaren Mittelwert bezüglich des Formfüllvermögens eines Kolbenringes realisiert werden. Die Art und Ausbildung der Querschnittsreduzierung kann auf Grund des Ringquerschnittes und den damit verbundenen Flächenträgheitsmomenten im ersten und vierten Quadranten bedarfsweise variieren.

Der Erfindungsgegenstand ist anhand eines Ausführungsbeispieles in der Zeichnung dargestellt und wird wie folgt beschrieben. Es zeigen:

Figur 1      Kompressionskolbenring mit in Quadranten unterteiltem Ringumfang sowie lokaler Querschnittsschwächung im Stoßbereich,

Figur 2 u.3      Teildarstellungen des ersten und vierten Quadranten gem. Figur 1

Figur 4 u. 5    Prinzipskizzen des Formfüllvermögens eines Kolbenringes mit konstanter Wandstärke im Vergleich zu einem Kolbenring mit örtlicher Querschnittsabsenkung.

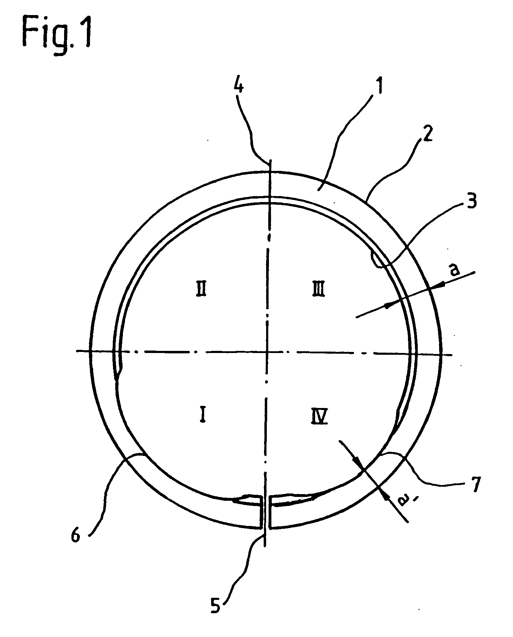

Figur 1 zeigt einen Kompressionskolbenring 1, der bezüglich seines Ringumfanges in vier Quadranten I, II, III, IV unterteilt ist. Der Kompressionskolbenring 1 weist eine äußere Umfangsfläche 2 und eine innere Umfangsfläche 3 auf. Die Umfangsflächen 2,3 definieren eine vorgebbare Ringwandstärke a. Diese Wandstärke a wird, in Umfangsrichtung gesehen, im wesentlichen bis zum Beginn des I bzw. IV Quadranten beibehalten, während im I und IV Quadranten des Kompressionskolbenringes 1 eine lokale Querschnittsschwächung der Wandstärke a in Richtung einer minimalen Wandstärke a' herbeigeführt wird. Die radiale Wandstärke a ist ausgehend vom Ringrücken 4 bis in den Anfangsbereich der Quadranten I und IV gleich und fällt in Richtung des Stoßes 5 hin zunächst ab, wobei im Stoßbereich wieder die gleiche radiale Wandstärke a wie im Bereich des Ringrückens 4 gegeben ist. Die lokal ausschließlich im ersten und vierten Quadranten vorgesehene Querschnittsschwächung ist mit den Bezugszeichen 6 und 7 bezeichnet.

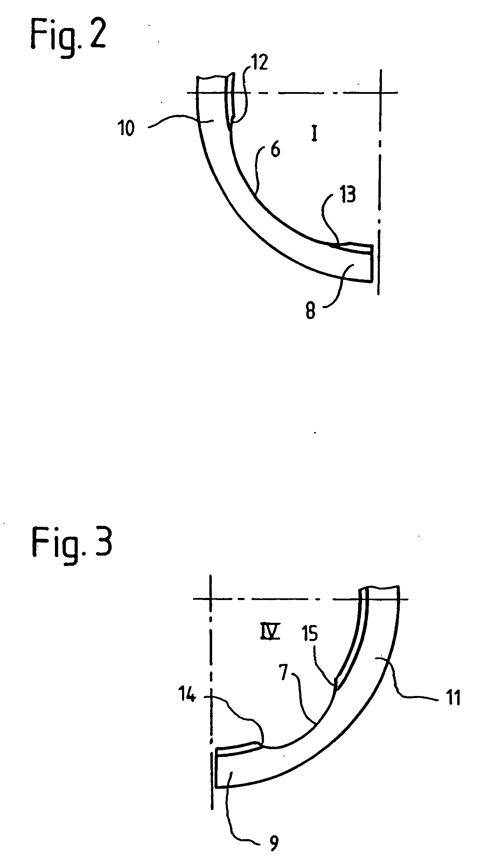

Die Figuren 2 und 3 zeigen Ausschnitte der Quadranten I und IV mit den lokalen Querschnittsschwächungen 6 und 7, die in den gezeigten Beispielen gemäß Figuren 2 und 3 geringfügig unterschiedlich ausgebildet sind. Figur 2 offenbart eine, bezogen auf die Umfangslänge, größere Querschnittsschwächung 6, während die Querschnittsschwächung 7 im vierten Quadranten, bezüglich ihrer Umfangslänge, geringer ausfällt. In beiden Fällen ist der stoßnahe Bereich 8,9, bezüglich seiner Umfangslänge, kürzer ausgebildet, als der in Richtung des korrespondierenden Quadranten II bzw. III gerichtete Bereich 10,11, wobei beide Bereiche 8,10 bzw. 9,11 mit gleicher radialer Wandstärke a versehen sind. Die Übergangsbereiche 12,13,14,15 vom vollen Querschnitt mit der Wandstärke a in den geschwächten Bereich 6,7 erfolgt über Radien.

Andersartige Konturen der lokalen Querschnittsschwächung sind ebenfalls denkbar. Ebenfalls denkbar sind mehrere hintereinander vorgesehene Querschnittsschwächungen, die ggf. ineinander übergehen.

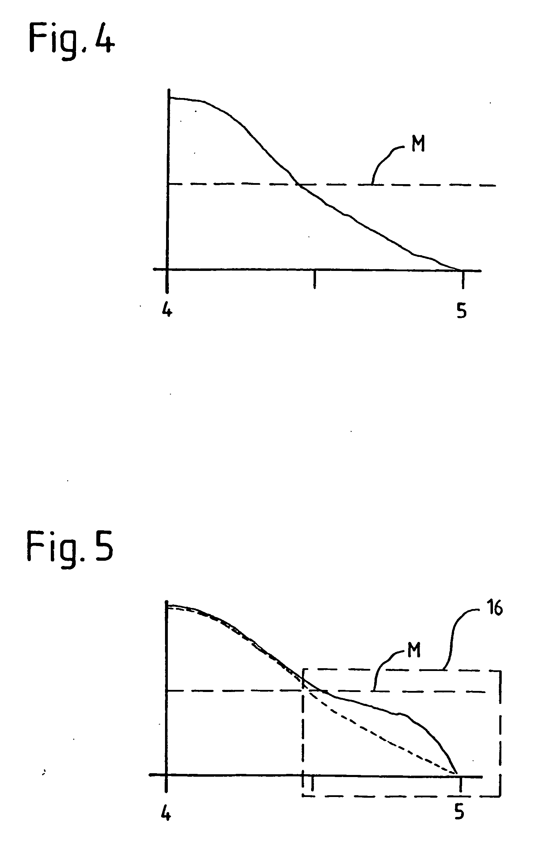

Die Figuren 4,5 zeigen eine vergleichende Gegenüberstellung des Formfüllvermögens eines Kompressionskolbenringes mit konstanter Wandstärke a im Vergleich zu einem Kompressionskolbenring mit örtlicher Querschnittsabsenkung (Wandstärke a').

Wie bereits in der Beschreibungseinleitung zum Ausdruck gebracht, basiert die Art der Anpassung eines Kompressionskolbenringes an die Form einer Zylinderwand auf dessen durchschnittlichem Formfüllvermögen. Bei Kompressionskolbenringen mit konstanter Wandstärke a ist eine Aussage zum Formfüllvermögen nur über einen Mittelwert (M) (gestrichelte Linie) möglich.

Jedoch hängt das Funktionsverhalten eines Kompressionskolbenringes von den örtlich schlechtesten Anpassungsmöglichkeiten ab. Wie Figur 4 zu entnehmen ist, nimmt die Anpassungsfähigkeit, den Zylinderverzügen zu folgen, vom Ringrücken 4 zum Stoß 5 hin ab (Figur 4). Der angestrebte Mittelwert kann auf den gesamten Umfang des Kompressionskolbenringes 1 nicht erreicht werden. Die Erhöhung des angestrebten Mittelwertes durch Absenkung des Ringquerschnittes

$$I = \frac{b \cdot h^3}{12}$$

bringt nur bedingt eine Verbesserung des Zustandes. Die Nachteile bei erhöhter Spreizung oder bei gleichbleibender Spreizung und abgesenkter Eigentangentialkraft zur Erreichung eines erhöhten Mittelwertes beinhalten zusätzliche Probleme bei der Abdichtung des Brennraumes.

Durch Auslegung eines Kompressionskolbenringes mit erfindungsgemäß örtlichen Querschnittsabsenkungen ausschließlich im ersten und vierten Quadranten kann ein wesentlich höheres Formfüllvermögen, ausgehend vom Ringrücken zum Stoß hin, erzielt werden. Damit kann man je nach Definition der Querschnittsabsenkung im ersten und vierten Quadranten eine gezielte Annäherung an den angestrebten Mittelwert erreichen, ohne die Tangentialkraft gegenüber dem ungeschwächten Ring entscheidend abzusenken. Art und Ausbildung der Querschnittsreduzierung im ersten und vierten Quadranten kann aufgrund unterschiedlicher Ringquerschnitte und den damit einhergehenden Flächenträgheitsmomenten variieren. Der in Figur 5 gepunktete Bereich 16 stellt den anzustrebenden Bereich dar.

## Patentansprüche

1. Mit einem Stoßbereich (5) versehener Kompressionskolbenring (1), der am Ringumfang Querschnittsschwächungen (6,7) aufweist, wobei der Ringumfang des Kompressionskolbenringes (1) in vier Quadranten (I,II,III,IV) aufgeteilt ist, **dadurch gekennzeichnet, dass** bei Positionierung der einen Stoßkante im ersten und der anderen Stoßkante im vierten der gedachten Quadranten (I,IV) die jeweilige Querschnittsschwächung (6,7) ausschließlich im ersten und vierten Quadranten (I,IV) beiderseits des Stoßes (5) und zwar im stoßnahen Umfangsbereich über die gesamte Ringhöhe vorgesehen ist wobei im Stoßbereich wieder die gleiche radiale Wandstärke wie im Bereich des Ringrückens (4) gegeben ist.

2. Kompressionskolbenring nach Anspruch 1, **da-**

**durch gekennzeichnet, dass** die Querschnittsschwächung (6,7) mit gleichmäßiger Abnahme der Ringwandstärke (a) zwischen den ungeschwächten Bereichen (8,10 bzw. 9,11) und dem Bereich der geringsten Wandstärke (a') verläuft.

**3.** Kompressionskolbenring nach Anspruch 1 oder 2, **dadurch gekennzeichnet, dass** die Querschnittsschwächung (6,7) mit ungleichmäßiger Abnahme der Wandstärke (a) zwischen den ungeschwächten Bereichen (8,10 bzw. 9,11) und dem bzw. den Bereichen der geringsten Wandstärke (a') verläuft.

**4.** Kompressionskolbenring nach einem der Ansprüche 1 bis 3, **dadurch gekennzeichnet, dass** die Querschnittsschwächung (6,7), ausgehend vom jeweils ungeschwächten Bereich (8,10 bzw. 9,11) eine, im wesentlichen nach Art eines Radius vorgebbarer Länge ausgebildete Kontur beinhaltet.

**5.** Kompressionskolbenring nach einem der Ansprüche 1 bis 4, **dadurch gekennzeichnet, dass** der Bereich der geringsten Wandstärke (a') etwa auf halber Umfangslänge des ersten und vierten Quadranten (I,IV) angeordnet ist.

**6.** Kompressionskolbenring nach einem der Ansprüche 1 bis 5, **dadurch gekennzeichnet, dass** die Übergangsbereiche (12,13,14,15) vom ungeschwächten (8,10 bzw. 9,11) in den geschwächten Umfangsbereich (6,7) in gerundeter Form vorgesehen sind.

**7.** Kompressionskolbenring nach einem der Ansprüche 1 bis 6, **dadurch gekennzeichnet, dass** im Bereich des ersten und vierten Quadranten (I,IV) die stoßnahen ungeschwächten Bereiche (8, 9) eine geringere Umfangslänge aufweisen als diejenigen sich in Richtung des zweiten bzw. dritten Quadranten (II, III) erstreckenden ungeschwächten Bereiche (10, 11).

**Claims**

**1.** Compression piston ring (1) which is provided with an impact area (5) and which has areas of reduced cross-section (6,7) around its circumference, the circumference of the compression piston ring (1) being divided into four quadrants (I, II, III, IV), **characterised in that** when the one impact edge is positioned in the first and the other impact edge in the fourth of the imagined quadrants (I, IV), the respective area of reduced cross-section (6, 7) is provided exclusively in the first and fourth quadrants (I, IV) on either side of the impact (5), specifically in the circumferential area close to the impact, over the entire height of the ring, the same radial wall thickness being provided again in the impact area as in the region of the ring back (4).

**2.** Compression piston ring according to claim 1, **characterised in that** the area of reduced cross-section (6, 7) extends with a uniform decrease in the ring wall thickness (a) between the non-reduced areas (8, 10 or 9, 11) and the area of the smallest wall thickness (a').

**3.** Compression piston ring according to claim 1 or 2, **characterised in that** the area of reduced cross-section (6, 7) extends with an uneven decrease in the wall thickness (a) between the non-reduced areas (8, 10 or 9, 11) and the area or areas of the smallest wall thickness (a').

**4.** Compression piston ring according to one of claims 1 to 3, **characterised in that** the area of reduced cross-section (6, 7), starting from the respective non-reduced area (8, 10 or 9, 11), has a contour substantially in the form of a radius of predeterminable length.

**5.** Compression piston ring according to one of claims 1 to 4, **characterised in that** the area of the smallest wall thickness (a') is arranged along approximately half the circumferential length of the first and fourth quadrants (I, IV).

**6.** Compression piston ring according to one of claims 1 to 5, **characterised in that** the transition regions (12, 13, 14, 15) from the non-reduced (8, 10 or 9, 11) to the reduced circumferential area (6, 7) are provided in rounded form.

**7.** Compression piston ring according to one of claims 1 to 6, **characterised in that** in the region of the first and fourth quadrants (I, IV), the non-reduced areas (8, 9) close to the impact have a smaller circumferential length than those non-reduced areas (10, 11) which extend in the direction of the second or third quadrant (II, III).

**Revendications**

**1.** Segment de piston de compression (1) qui est muni d'une zone de butée (5) et qui comporte des diminutions de section (6, 7) sur la périphérie du segment, la périphérie du segment de piston de compression (1) étant divisée en quatre quadrants (I, II, III, IV), **caractérisé en ce que** si l'un des bords de butée est positionné dans le premier quadrant (I) imaginaire et l'autre bord de butée dans le quatrième quadrant (IV) imaginaire, la diminution de section (6, 7) dans chaque cas est prévue exclusivement dans le premier et le quatrième quadrant (I, IV) de part et d'autre de la butée (5), à savoir dans la zone périphérique proche de la butée sur toute la hauteur du segment, la zone de butée ayant à nouveau la même épaisseur de paroi radiale que dans la zone du dos du segment (4).

2. Segment de piston de compression selon la revendication 1, **caractérisé en ce que** la diminution de section (6, 7) s'étend avec une diminution uniforme de l'épaisseur de paroi (a) entre les zones non diminuées (8, 10 respectivement 9, 11) et la zone avec une épaisseur de paroi minimale (a').

3. Segment de piston de compression selon la revendication 1 ou 2, **caractérisé en ce que** la diminution de section (6, 7) s'étend avec une diminution non uniforme de l'épaisseur de paroi (a) entre les zones non diminuées (8, 10 respectivement 9, 11) et la ou les zones avec une épaisseur de paroi minimale (a').

4. Segment de piston de compression selon l'une quelconque des revendications 1 à 3, **caractérisé en ce que** la diminution de section (6, 7), en partant de chacune des zones non diminuées (8, 10 respectivement 9, 11), présente un contour sensiblement sous la forme d'un rayon de longueur pouvant être prédéfinie.

5. Segment de piston de compression selon l'une quelconque des revendications 1 à 4, **caractérisé en ce que** la zone avec l'épaisseur de paroi minimale (a') est agencée à peu près sur la moitié de la longueur de la périphérie du premier et du quatrième quadrant (I, IV).

6. Segment de piston de compression selon l'une quelconque des revendications 1 à 5, **caractérisé en ce que** les zones de transition (12, 13, 14, 15), entre les zones non diminuées (8, 10 respectivement 9, 11) et la zone affaiblie (6, 7), sont prévues avec une forme arrondie.

7. Segment de piston de compression selon l'une quelconque des revendications 1 à 6, **caractérisé en ce que**, dans la zone du premier et du quatrième quadrant (I, IV), les zones non diminuées (8, 9) à proximité de la butée ont une longueur périphérique qui est inférieure à celle des zones non diminuées (10, 11) qui s'étendent respectivement vers le deuxième et le troisième quadrant (II, III).

## Fig.1

## Fig. 2

12

10

6

I

13

8

## Fig. 3

IV   15

7

14

11

9

# Fig. 4

# Fig. 5